# EUROPEAN PATENT SPECIFICATION

(11) **EP 2 929 959 B1**
(45) Date of publication and mention of the grant of the patent: **04.01.2017**
(21) Application number: 15162726.2
(22) Date of filing: 08.04.2015
(51) Int. Cl.: B22D 39/04, B22D 41/06, B22D 41/12, C21B 3/10, B60P 1/16, B60P 1/34

(54) **MANUAL CASTING SYSTEM FOR CAST METALS IN MOULD OR MOULD IN SAND**
MANUELLES GUSSSYSTEM ZUM GIESSEN VON METALL IN FORMEN ODER FORMEN IN SAND
SYSTÈME DE COULÉE MANUELLE PERMETTANT DE COULER DES MÉTAUX DANS UN MOULE DANS DU SABLE

(30) Priority: 08.04.2014 IT FI20140078
(43) Date of publication of application: 14.10.2015
(73) Proprietor: Fonderie Palmieri S.p.A., 50041 Calenzano (FI) (IT)
(72) Inventor: TOMMASO, Susini, 50041 Calenzano (FI) (IT)
(74) Representative: Fanfani, Stefano

(56) References cited:
- DE-B- 1 095 200
- DE-B- 1 180 764
- GB-A- 879 327

## Description

### Technical field

The present invention belongs to the sector of the foundry machines, in particular to the sector of devices used to manually cast ferrous and non-ferrous alloys in second melting foundries, while carefully controlling the weight of the cast material, even while the treatment of the molten material is in progress.

### State of the art

In modern foundries the problem is felt of transporting molten metals in an economic and flexible way.

At present, two basic casting systems are alternatively used in second melting foundries; the former is based on the use of a manual ladle, moved by means of a hoist and a crane, whereas the second system is based on the use of a casting furnace, the latter being either cold or hot.

The system based on the use of a manually controlled ladle is proved to be slow, difficult to implement and not free from risks for operators; in particular, when using this process it is very complex to operate onto the composition of the alloy or in any case to make corrections of the composition of the alloy in the ladle.

Notwithstanding the limitations mentioned here above, the ladle casting process is widely used for productions limited down to few castings, mainly because of its cost effectiveness; in general this process is particularly advantageous both for very small pieces and very big pieces.

Conversely, the hot furnace casting process is particularly advantageous in that it can be automated, hence it is often used for mass production of larger numbers of medium size pieces.

The hot casting process features a number of advantages as far as production is concerned, because of its volumetric capacity resulting from the presence of a storage of cumulative molten material, which is held at a preset temperature, which is found to be very useful to increase the production capacity of a company.

Furthermore this type of process makes it possible to carefully control the quantity of material delivered, to prevent undesired spills and also to control the casting speed and its repeatability in the time.

When using a casting furnace, very improbably will a foundry be in a condition whereby wastes are to be made because of lack of cast iron, of the temperature of the cast iron being too low or too high, or because of the casting speed; the casting furnace process is recognized as the best casting process technically wise for big and very big series.

However, the hot furnace casting process also presents a number of non-negligible disadvantages, in particular, said method significantly conditions the organization of the production, since it does not allow to completely change the type of alloy from one batch to the next one, because the furnace can never be completely emptied, in that at least a small quantity of molten metal, the so called "dowry", has to be held internally thereto; this circumstance, in particular, limits very much the types of cast iron that can be processed in one and the same working day.

Also, the hot furnace method makes a double transfer unavoidable, first from the furnace to a ladle, the latter being usually supported by a forklift, then, after putting it into the ladle, the liquid cast iron is possibly treated, for instance by using a converter or a core wire, to be finally transferred into the casting furnace.

Evident are the limitations of this method also from the energy point of view, in that it entails the use of an additional ladle, to be held at a preset temperature during the melting step.

Also, the casting furnace requires an adequate space and absorbs a non-negligible power, besides requiring a nitrogen tank, a storage plant; and a nitrogen gasification plant; all of these plants shall be maintained and controlled in time and are, all together, definitely very expensive to buy.

These are the reasons why movable casting devices have been developed, so as to reduce the typical disadvantages of a manually controlled ladle casting process.

However, the known solutions feature a large number of limitations: first of all, they don't have any reference and fixed check points, hence the operator is anyway obliged to evaluate weights and distances merely on the basis of his own experience.

Also, in the known systems the ladle is moved by using rack-and-pinion type systems which, at the end of the casting, are often unable to operate rapidly enough to prevent the molten metal from spilling out.

Patent document DE 10 95 200 B describes a manual casting device wherein the upper carriage only moves with respect to the one frame that the device is provided with, consequently, whenever it is necessary to lift the ladle to change the casting height, it is necessary to synchronously lift both carriages.

Patent document GB 879,327 A describes a molten metal handling system, with no weighing system, whereas patent document DE 11 80 764 B describes a device that is told to be possibly equippable with a weighing system. However this patent document does not describe how does it operate nor how is it capable of weighing the ladle only, while preventing the weights of other component parts of the device from resting on the scale.

### Objects and summary of the invention

An object of the present invention is therefore to supply foundries with a casting vehicle not expensive to buy and requiring reduced maintenance, while being capable of guaranteeing a high production flexibility, being capable of casting a different cast iron ladle at every emptying, without any need for using a supplementary heating energy and also allowing a cast iron treatment without any need for transferring materials. Also, the subject vehicle makes it possible to weigh the material in the ladle and to pick-up quantities of molten metal exactly determined, by operating while the ladle comes from the furnace as well as after the casting of one or several moulds or even after the cast iron treatment; as a matter of fact, this vehicle makes it possible to control the weight of the mould with respect to the theoretical target weight in real time.

As described above, weight control is particularly useful also while the molten metal is treated.

A further object of the present invention is to provide a casting vehicle that is free of moving, having no need for any power installations, electrical cables, hydraulic or pneumatic pipes or the like, being it self-propelled.

It is also worth noting that, by using a vehicle according to the present patent application, ladle replacement is very easy to perform and that a different ladle can be installed as a function of the specific alloy to use and of the number of moulds to be consecutively filled with one pick-up from the melting furnace.

The vehicle according to the present patent application can also be provided with two sets of reference, generally vertical-axis, wheels, which engage specifically developed, floor mounted guides shaped like longitudinal ridges, so as to provide transversal position references, very useful to foster medium series castings.

As better explained in the following description, thanks to the front hinge located just below the spout of the ladle, a further advantage is achieved in that the casting point is located just below the spout of the ladle, hence it can be easily positioned via hydraulic pistons, to locate it in the correct casting point, without being obliged to displace the vehicle.

Advantageously, the closer the front hinge is to the pouring spout, the more the casting point remains unchanged; furthermore, should the front hinge collapse, the ladle does not fall because the arm operates as a support anyway.

### Brief Description of Drawings

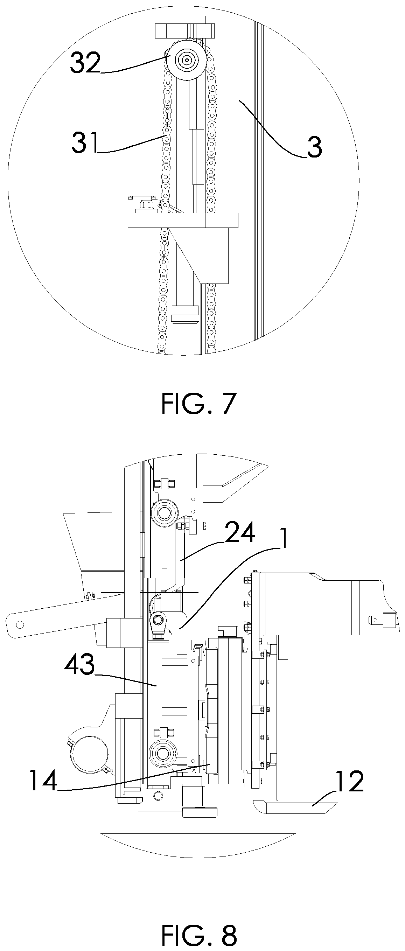

**Fig. 1** shows a side view of the vehicle according to the present patent application, the ladle (8) being in its filling position; above the driver's seat the display (9) of the scale is visible, the latter being carried by the lower carriage (1). The fork (11) of a forklift type is visible in the lower part of the drawing.
   The front (5) and rear (6) reference wheels are visible. Also visible are an inner frame (3) and pieces of a chain (31), as well as a pulley (32) around which said chain (31) is transmitted; the chains (31) have been only partially drawn to make it more comfortable to read the drawing.
   The figure also shows the profiles of the details shown in Figures 7 and 8 respectively.

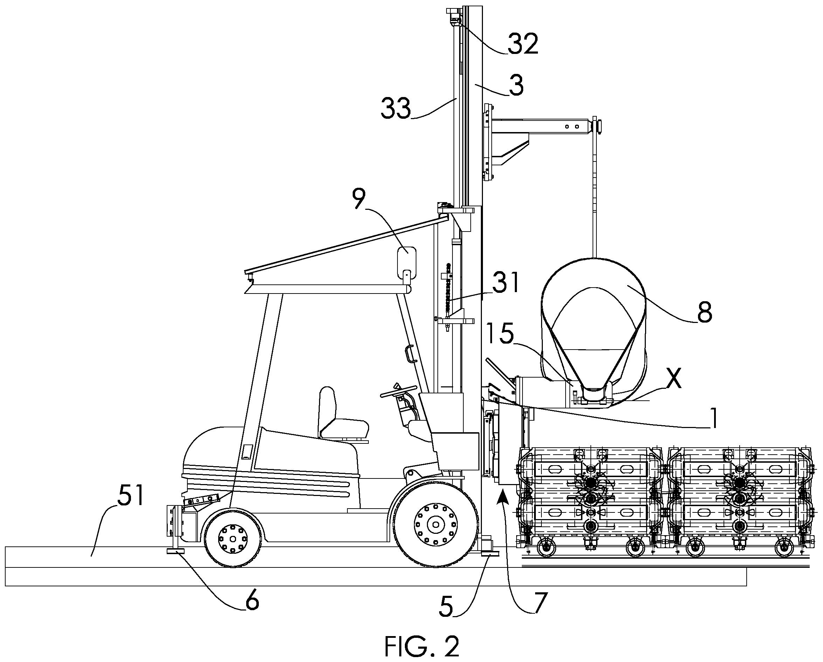

**Fig. 2** also shows a side view, wherein the ladle (8) is shown in the casting position, i.e. rotated with respect to the horizontal axis (X) of the front hinge placed on the arm (15); the wheels (5, 6) engage the longitudinal guides (51) located in the ground; only the guide behind the vehicle is shown for the sake of clearness. The figure also shows the lower carriage (1), the inner frame (3) and a hydraulic piston (33); conversely, the position of the scale (7), of which the display (9) is visible, is only indicated.
   On the top of the inner frame (3) one of the pulleys (32) and one chain (31) below are partially visible.

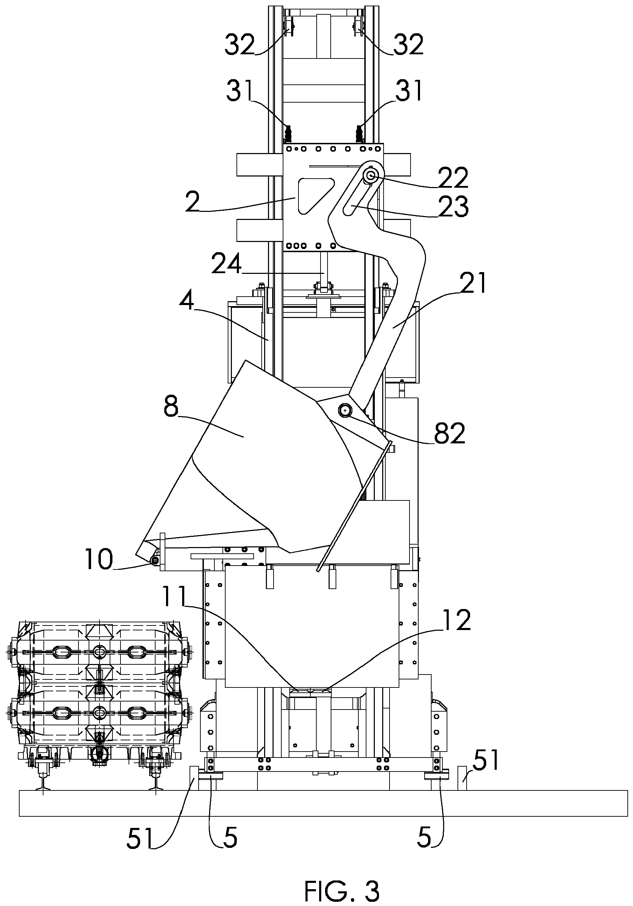

**Fig. 3** shows a front view of the vehicle, the ladle (8) being in its casting position, rotated around the front hinge (10) thanks to the lifting action exerted by a rod (21), mounted on the upper carriage, on the rear hinge (82) of the ladle itself. In the upper part of said rod (21) is also visible a slot (23) which receives a pin (22) projecting from the upper carriage (2). In the embodiment here illustrated, it is particularly evident how the pin (22) is mounted inside the slot (23) with a wide tolerance, so that the contact between the two elements is such as to eliminate or at least reduce transmission of weight during the weighing step.
   In the top section of the inner frame are visible both pulleys (32) around which the chains (31) are transmitted respectively; of the latter, only the two ends connected to the upper carriage (2) are shown in order not to complicate the figure too much.
   An outer frame (4) and a rest bracket (24) are shown in the middle part of the figure.
   The forks (11, 12), the front wheels (5), and the longitudinal guides (51) are visible in the lower part of the figure.

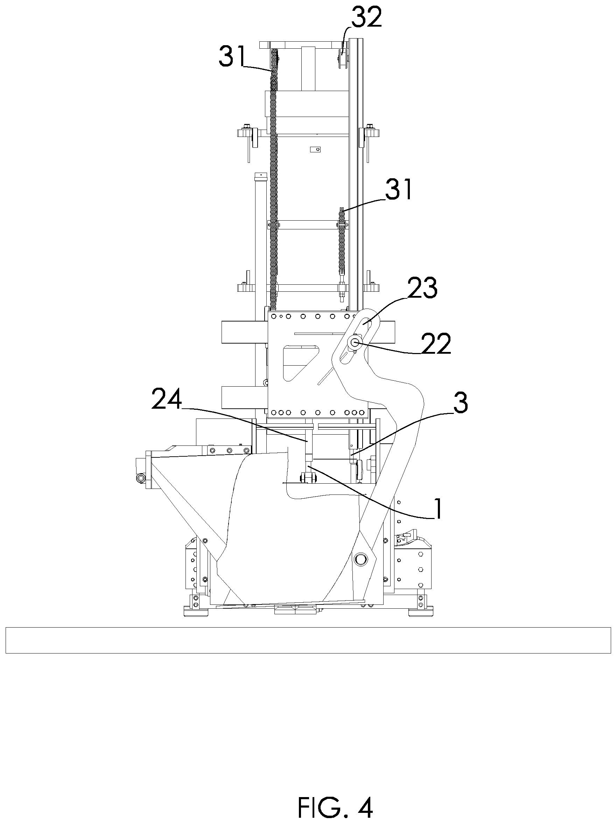

**Fig. 4** shows a front view wherein a number of elements have been partially or completely removed to make it possible to view a chain (31), a pulley (32), and the rest bracket (24) acting onto the lower carriage (1). Also note, in conjunction with the detail shown in Figure 8, the inner frame (3) which rests on and transfers its own weight onto the lower carriage (1) when the latter is completely lowered down.

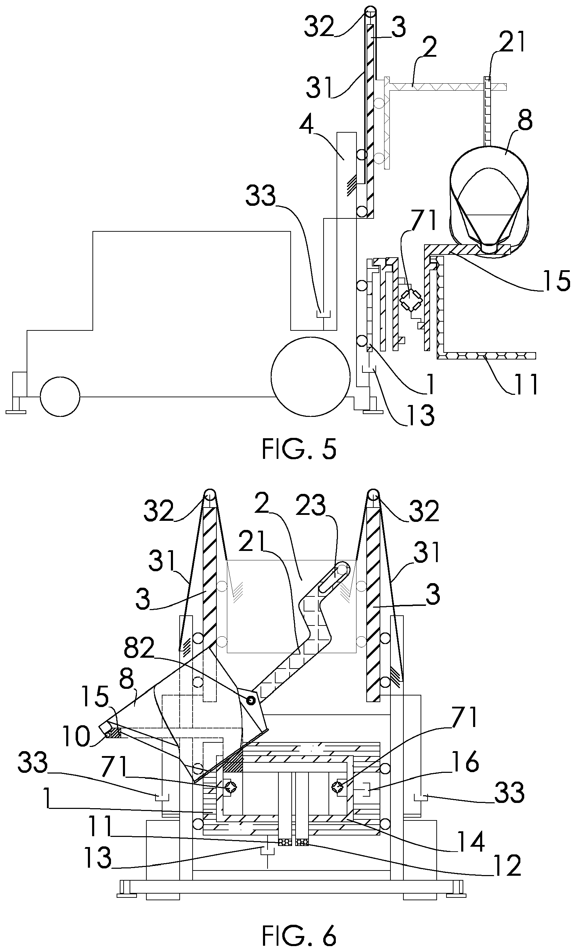

**Fig. 5** shows a side view, functional diagram of the embodiment of the invention illustrated in the previous figures. The symbols and the positions of the pistons and of the other elements are for illustrative purpose only. It shows one of the load cells (71) of the scale (7).
**Fig. 6** shows a front view, functional diagram of the embodiment of the invention illustrated in the previous figures. The translation piston (16) of a further carriage (14) slidingly coupled to the lower carriage (1) is also shown.

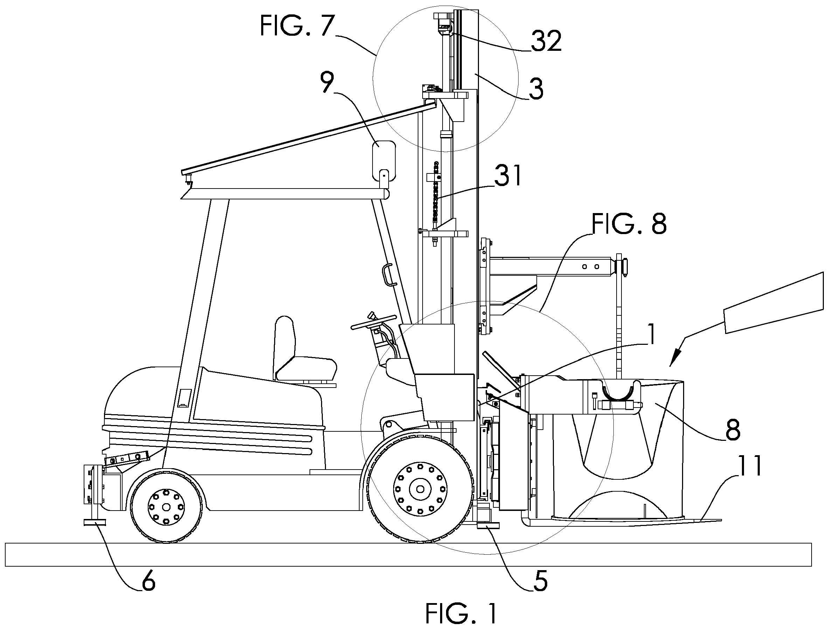

**Fig. 7** shows a detail of figure 1, wherein the casing of the inner frame (3) has been removed to make it possible to view a pulley (32) and a chain (31).
**Fig. 8** shows a detail of figure 1 wherein, thanks to the casing and other elements having been removed, it is possible to view a special embodiment, the lower carriage (1) being slidingly coupled to a further carriage (14) capable of horizontally moving under the action exerted by a hydraulic piston. The load cells are not visible here, whereas the rest bracket (24) and the piston (43) of the lower carriage (1) are visible.

### Detailed description of an embodiment of the invention

The manual casting system according to the present patent application comprises a self-propelled vehicle and special equipment; six main component parts are identified in this assembly: a lower carriage (1), an upper carriage (2), an inner frame (3), an outer frame (4), a front reference system (5) with wheels, and a rear reference system (6) with wheels.

According to a practical and economical embodiment of the invention, the vehicle according to the present patent application can be implemented starting from a normal forklift.

The lower carriage (1) consists of a carriage sliding internally to the outer frame (4) by means of a two-way hydraulic piston (43); the latter lifts said lower carriage (1) up to a height, which might even be predetermined for the sake of practicality, so as to bring the casting point of the ladle (8) up to a predetermined height, in order to cast the metal into the mould at a fixed difference in level.

The vertical movement of the lower carriage (1) is used to make the ladle approach the furnace.

The lower carriage (1) is also capable of performing a horizontal translatory movement, in a direction transversal to the axis of advancement of the vehicle; said horizontal translatory movement is used to approach the spout of the ladle as much close as possible to the iron runner present on the mould, which varies as a function of the model and then to move away therefrom; this movement can be conveniently implemented by using a hydraulic cylinder.

In the version illustrated in the following figures the translatory movement is obtained thanks to a further carriage (14) slidingly coupled to the lower carriage (1) so as to horizontally move with respect to the latter, driven by a hydraulic piston (16). Alternatively, translation systems integral with the lower carriage (1) are commonly marketed.

On the lower carriage (1) there is mounted a scale (7) with load cells (71), which is used to measure the weight of the ladle (8) and to indicate it on the display (9) located above the driver's seat. Whenever the ladle contains molten metal, the scale indicates the overall weight of the ladle and of the metal; in order to know the weight of the molten metal only, the scale shall be calibrated before filling.

According to a particularly effective and practical embodiment of the invention, the display (9) of the scale (7) can be rotated in order to be visible to the furnace operator, who can in this way know the weight of the metal in the ladle before and after filling and casting.

Above the scale (7) there are mounted two forks (11, 12) of the forklift type, which are used to support the ladle (8) whenever the latter is in its pick-up, or iron treatment, position.

The weight of the ladle is correctly measured whenever the latter is supported by the forks (11, 12) of the vehicle. On the load plate of the scale (7) an arm (15) is mounted, which supports the ladle (8) on the front, along with its respective front hinge (10) around which the ladle (8) rotates upon overturning.

The movement of the upper carriage with respect to the inner frame can take place independently or via chains (31), whose ends are fixed to the outer frame (4) and to the upper carriage (2) respectively and are transmitted around pulleys (32) rotationally coupled to the upper ends of the inner frame (3) respectively so that, upon lifting the latter, the upper carriage (2) is also lifted.

The upper carriage (2) is provided with a structure comprising a slotted rod (21) which allows to overturn the ladle (8) by taking advantage of the sheave transmission onto the pulleys (32) of the chains (31) of the inner frame (3) and of the action exerted by at least one hydraulic piston (33).

According to a preferred embodiment, in correspondence with the two upper ends of the inner frame (3) there are mounted two pulleys (32) on which the two chains (31) slide respectively. Advantageously is the length of the chains such as not to drive into motion the upper carriage (2) immediately upon operating the inner frame (3), thus guaranteeing a greater sensitivity.

This transmission system makes it possible to get a high sensitivity in setting the quantity of molten metal to run during the casting operation.

Also, thanks to the slot (23) present in the rod (21), whenever the ladle is resting on the forks (11, 12), the weight measured by the scale (7) does not vary with the height of the lower carriage (1) nor with the transversal position of the ladle (8).

Furthermore, as shown in Fig. 3 and in Fig. 8, the upper carriage (2) comprises a rest bracket (24) on the bottom side, through which the upper carriage (2) discharges its own weight onto the lower carriage (1) underneath, whereas the weight of the ladle (8) is not transferred to the upper carriage (2) thanks to the slot (23) through which the rod (21) is slidingly coupled to the pin (22) projecting from the front carriage (2) on the front.

With respect to the known art as per document DE 10 95 200 B, the invention according to the present patent application does not require any attention to be paid in moving the carriages synchronously, because the inner frame, via a specially designed element, rests on the lower carriage, and lifting the latter results in lifting the inner frame too.

Furthermore, the two carriages being independent makes it possible to take advantage of the transversal movement of the lower carriage (1) without problems: a correct weighing is guaranteed somehow in any transversal positions of the ladle (8).

Alternatively, the movement of the upper carriage (2) can be produced directly by the action exerted by one or several hydraulic pistons, to the detriment of sensitivity. In an alternative embodiment, the two ends of the one or several hydraulic pistons are associated with the carriages respectively, so as to allow the weight of the upper carriage (2) to be transferred onto the lower carriage (1). In this latter embodiment, the presence of a movable inner frame (3) would not be necessary any longer.

Both the upper (2) and lower (1) carriages are equipped with internal rollers, in order to make it easier for them to slide as well as to prevent the carriages themselves from being submitted to torsion phenomena due to eccentric loads.

In a preferred embodiment of the invention, the casing of the scale is recommended to be made of steel AISI 318, in order not to have significant thermal deformations; this way, even if the temperature of the casing exceeds 150 °C during the operation, the temperature of the scale does not exceed 60 °C.

The vehicle is equipped with sliding wheels which make it possible for the operator to easily obtain a right reference during the positioning step before casting; said wheels are usually vertical-axis ones and engage specifically designed guides mounted on the floor of foundries, so as to form projecting ridges against which the treads of said wheels rest.

According to an advantageous embodiment of the invention, the movable position of the ladle and of the overturning point can be adapted according to the specific circumstances of each individual foundry.

It is also worth recalling that all hydraulic pipes shall be coated by a steel plait and the external ones shall also be protected by a heat-resistant material, in order to better protect them from the impact with incandescent spatters.

Advantageously can said ladle (8) be provided with a lid to keep the molten metal at a given temperature.

## Claims

1. A self-propelled foundry vehicle for making castings of molten metal from a ladle (8), which, during the loading step, rests on a lower carriage (1), placed in front of said vehicle and featuring a vertical translatory movement, said ladle (8) being rotationally coupled to said lower carriage (1) by means of a front hinge (10) placed near the spout of said ladle (8), the latter being also functionally connected to appropriate transmission of motion means, activated by said vehicle and hinged at the rear (82) to said ladle (8), lifting said rear hinge (82) brings said ladle (8) to a work position by making it rotate around said front hinge (10), said transmission-of-motion means comprising a rod (21) whose lower end is rotationally connected to said ladle (8) via said rear hinge (82) and whose upper end is functionally connected to said ladle (8) via said rear hinge (82) and whose upper end is functionally connected to an upper carriage (2) vertically slidable with respect to said vehicle, **characterized in that** it comprises a scale (7) on the load plate of which an arm (15) is mounted, which supports said ladle (8) on the front via said front hinge (10).

2. A self-propelled vehicle according to the previous claim, **characterized in that** it comprises resting means which, during said loading step, unload the weight of said upper carriage (2) onto said lower carriage (1), thus making the weighing operation possible.

3. A self-propelled vehicle according to the previous claim, **characterized in that** the resting means comprise a resting bracket (24).

4. A self-propelled vehicle according to one or several of the previous claims, **characterized in that** said lower carriage (1) is capable of performing a horizontal translatory movement in a direction transversal to the axis of advancement of the vehicle.

5. A self-propelled vehicle according to one or several of the previous claims, **characterized in that** said horizontal translatory movement which said lower carriage (1) is capable of is obtained by slidingly coupling to said lower carriage (1) a further carriage (14) capable of a horizontal translatory movement with respect to said lower carriage (1).

6. A self-propelled vehicle according to one or several of the previous claims, **characterized in that** the upper end of said rod (21) features a slot (23) which slidingly receives a pin (21) projecting from the upper carriage (2).

7. A self-propelled vehicle according to one or several of the previous claims, **characterized in that** said slot (23) receives the stem of said pin (21) with a wide tolerance.

8. A self-propelled vehicle according to one or several of the previous claims, **characterized in that** said upper carriage (2) is driven by at least one hydraulic piston (33).

9. A self-propelled vehicle according to the previous claim and at least claim number 2, **characterized in that** said at least one hydraulic piston (33) also operates as a rest means whenever it features its own ends associated with the said upper carriage (2) and with said lower carriage (1) respectively.

10. A self-propelled vehicle according to one or several of the previous claims, **characterized in that** said upper carriage (2) is driven by at least one hydraulic piston (43) by means of a transmission of motion system comprising one or several chains (31) transmitted around their respective pulleys (32) rotationally coupled to the upper ends of the inner frame (3), the ends of each chain being integrally connected to said outer frame (4) and to said upper carriage (2) respectively.

11. A self-propelled vehicle according to one or several of the previous claims, **characterized in that** said vehicle comprises vertical axis wheels (5, 6) which engage special guides (51) mounted on the ground.

12. A self-propelled vehicle according to one or several of the previous claims, **characterized in that** said scale (7) is protected by a casting made of a heat-resistant material.

13. A self-propelled vehicle according to one or several of the previous claims, **characterized in that** all of the hydraulic pipes are coated by a steel plait and the external ones are also protected by a heat resistant material.

14. A self-propelled vehicle according to one or several of the previous claims, **characterized in that** said front hinge (10) is located just below the spout of said ladle (8).

15. A self-propelled vehicle according to one or several of the previous claims, **characterized in that** said ladle (8) has a lid to retain the temperature of the molten metal.

## Patentansprüche

1. Selbstgetriebenes Gießereifahrzeug zum Vergießen von geschmolzenem Metall aus einer Gießpfanne (8), das während des Ladeschritts auf einem unteren Wagen (1) aufliegt, der vor dem Fahrzeug platziert ist, und aufweisend eine vertikale Verfahrbewegung, wobei die Gießpfanne (8) drehbar mit dem unteren Wagen (1) mittels eines frontseitigen Gelenks (10) gekuppelt ist, das in der Nähe der Ausgussöffnung der Gießpfanne (8) platziert ist, wobei Letztere auch betriebswirksam mit geeigneten Bewegungsübertragungsmitteln verbunden ist, die vom Fahrzeug aktiviert werden und mittels eines Gelenks an der Rückseite (82) an der Gießpfanne (8) befestigt sind, wobei das Heben des rückseitigen Gelenks (82) die Gießpfanne (8) in einer Arbeitsposition bringt, indem deren Drehung rund um das frontseitige Gelenk (10) veranlasst wird, wobei die Bewegungsübertragungsmittel eine Stange (21) umfassen, deren unteres Ende drehbar mit der Gießpfanne (8) über das rückseitige Gelenk (82) verbunden ist, und deren oberes Ende betriebswirksam mit der Gießpfanne (8) über das rückseitige Gelenk (82) verbunden ist, und deren oberes Ende betriebswirksam mit einem oberen Wagen (2) verbunden ist, der vertikal zum Fahrzeug verschiebbar ist, **dadurch gekennzeichnet, dass** es eine Waage (7) auf der Ladeplatte umfasst, von der ein Arm (15) montiert ist, der die Gießpfanne (8) an der Frontseite über das frontseitige Gelenk (10) stützt.

2. Selbstgetriebenes Fahrzeug nach dem vorhergehenden Anspruch, **dadurch gekennzeichnet, dass** es Auflagemittel umfasst, die während des Ladeschritts das Gewicht des oberen Wagens (2) auf den unteren Wagen (1) entladen, wodurch der Wägevorgang möglich wird.

3. Selbstgetriebenes Fahrzeug nach dem vorhergehenden Anspruch, **dadurch gekennzeichnet, dass** die Auflagemittel einen Auflagebügel (24) umfassen.

4. Selbstgetriebenes Fahrzeug nach einem oder mehreren der vorhergehenden Ansprüche, **dadurch gekennzeichnet, dass** der untere Wagen (1) in der Lage ist, eine horizontale Verfahrbewegung in einer Richtung durchzuführen, die quer zur Vorschubachse des Fahrzeugs verläuft.

5. Selbstgetriebenes Fahrzeug nach einem oder mehreren der vorhergehenden Ansprüche, **dadurch gekennzeichnet, dass** die horizontale Verfahrbewegung, die der untere Wagen (1) in der Lage ist auszuführen, erhalten wird, indem ein weiterer Wagen (14) verschiebbar mit dem unteren Wagen (1) gekoppelt wird, der in der Lage ist, eine horizontale Verfahrbewegung zum unteren Wagen (1) auszuführen.

6. Selbstgetriebenes Fahrzeug nach einem oder mehreren der vorhergehenden Ansprüche, **dadurch gekennzeichnet, dass** das obere Ende der Stange (21) eine Aussparung (23) aufweist, die verschiebbar einen Zapfen (21) aufnimmt, der aus dem oberen Wagen (2) hervortritt.

7. Selbstgetriebenes Fahrzeug nach einem oder mehreren der vorhergehenden Ansprüche, **dadurch gekennzeichnet, dass** die Aussparung (23) den Schaft des Zapfens (21) mit einer weiten Toleranz aufnimmt.

8. Selbstgetriebenes Fahrzeug nach einem oder mehreren der vorhergehenden Ansprüche, **dadurch gekennzeichnet, dass** der obere Wagen (2) von mindestens einem Hydraulikkolben (33) angetrieben wird.

9. Selbstgetriebenes Fahrzeug nach dem vorhergehenden Anspruch und mindestens nach Anspruch 2, **dadurch gekennzeichnet, dass** der mindestens eine Hydraulikkolben (33) auch als Auflagemittel arbeitet, wenn seine eigenen Enden jeweils mit dem oberen Wagen (2) und dem unteren Wagen (1) assoziiert sind.

10. Selbstgetriebenes Fahrzeug nach einem oder mehreren der vorhergehenden Ansprüche, **dadurch gekennzeichnet, dass** der obere Wagen (2) von mindestens einem Hydraulikkolben (43) mittels eines Bewegungsübertragungssystems angetrieben wird, umfassend eine oder mehrere Ketten (31), die rund um ihre jeweiligen Scheiben (32) übertragen werden, drehbar gekuppelt mit den oberen Enden des inneren Rahmens (3), wobei die Enden einer jeden Kette jeweils fest mit dem äußeren Rahmen (4) und dem oberen Wagen (2) verbunden sind.

11. Selbstgetriebenes Fahrzeug nach einem oder mehreren der vorhergehenden Ansprüche, **dadurch gekennzeichnet, dass** das Fahrzeug vertikale Achsräder (5, 6) umfasst, die in besondere Führungen (51), die am Boden montiert sind, eingreifen.

12. Selbstgetriebenes Fahrzeug nach einem oder mehreren der vorhergehenden Ansprüche, **dadurch gekennzeichnet, dass** die Waage (7) durch ein Gehäuse geschützt ist, das aus einem hitzebeständigen Material besteht.

13. Selbstgetriebenes Fahrzeug nach einem oder mehreren der vorhergehenden Ansprüche, **dadurch gekennzeichnet, dass** alle Hydraulikleitungen mit einem Flechtwerk aus Stahl überzogen sind und die äußeren auch durch ein hitzebeständiges Material geschützt sind.

14. Selbstgetriebenes Fahrzeug nach einem oder mehreren der vorhergehenden Ansprüche, **dadurch gekennzeichnet, dass** das frontseitige Gelenk (10) knapp unter der Ausgussöffnung der Gießpfanne (8) angeordnet ist.

15. Selbstgetriebenes Fahrzeug nach einem oder mehreren der vorhergehenden Ansprüche, **dadurch gekennzeichnet, dass** die Gießpfanne (8) einen Deckel aufweist, um die Temperatur des geschmolzenen Metalls aufrechtzuerhalten.

## Revendications

1. Véhicule automoteur pour fonderie pour réaliser des coulées de métal fondu d'une poche de coulée (8), lequel, pendant la phase de chargement, s'appuie sur un chariot inférieur (1), placé en face dudit véhicule et présentant un mouvement de translation, ladite poche de coulée (8) étant accouplée d'une façon rotationnelle avec ledit chariot inférieur (1) au moyen d'une charnière frontale (10) placée près du bec de coulée de ladite poche de coulée (8), celle-ci étant également fonctionnellement branchée à des moyens de transmission du mouvement appropriés, activés par ledit véhicule et articulés en correspondance de l'arrière (82) à la dite poche de coulée (8), le soulèvement de ladite charnière arrière (82) amenant ladite poche de coulée (8) sur une position de travail en la faisant tourner autour de ladite charnière frontale (10), lesdits moyens de transmission du mouvement comprenant une tige (21) l'extrémité inférieure de laquelle est branchée d'une façon rotationnelle à ladite poche de coulée (8) à travers ladite charnière arrière (82) et dont l'extrémité supérieure est fonctionnellement branchée à un chariot supérieur (2) verticalement glissable par rapport audit véhicule, **caractérisé en ce qu'il** comprend un escalier (7) sur la plateforme de chargement duquel est monté un bras (15) qui soutient ladite poche de coulée (8) devant à travers ladite charnière frontale (10).

2. Véhicule automoteur selon la revendication précédente, **caractérisé en ce qu'il** comprend des moyens d'appui lesquels, pendant ladite phase de chargement, déchargent le poids dudit chariot supérieur (2) sur ledit chariot inférieur (1), ainsi rendant possible l'opération de pesage.

3. Véhicule automoteur selon la revendication précédente, **caractérisé en ce que** les moyens d'appui comprennent une équerre-support d'appui (24).

4. Véhicule automoteur selon une ou plusieurs des revendications précédentes, **caractérisé en ce que** ledit chariot inférieur (1) est capable d'effectuer un mouvement de translation horizontal dans une direction transversale par rapport à l'axe d'avancement du véhicule.

5. Véhicule automoteur selon une ou plusieurs des revendications précédentes, **caractérisé en ce que** ledit mouvement de translation horizontal dont ledit chariot inférieur (1) est capable s'obtient en accouplant d'une façon glisssante audit chariot inférieur (1) un ultérieur chariot (14) capable d'effectuer un mouvement de translation horizontal par rapport audit chariot inférieur (1).

6. Véhicule automoteur selon une ou plusieurs des revendications précédentes, **caractérisé en ce que** l'extrémité supérieure de ladite tige (21) présente une fissure (23) qui reçoit d'une façon glissante une fiche (21) saillant du chariot supérieur (2).

7. Véhicule automoteur selon une ou plusieurs des revendications précédentes, **caractérisé en ce que** ladite fissure (23) reçoit la queue de ladite fiche (21) avec une grande tolérance.

8. Véhicule automoteur selon une ou plusieurs des revendications précédentes, **caractérisé en ce que** ledit chariot supérieur (2) est actionné par au moins un piston hydraulique (33).

9. Véhicule automoteur selon la revendication précédente et au moins la revendication 2, **caractérisé en ce que** ledit au moins un piston hydraulique (33) fonctionne également comme un moyen d'appui lorsque ses extrémités sont associées respectivement avec ledit chariot supérieur (2) et avec ledit chariot inférieur (1).

10. Véhicule automoteur selon une ou plusieurs des revendications précédentes, **caractérisé en ce que** ledit chariot supérieur (2) est actionné par au moins un piston hydraulique (43) à travers un système de transmission du mouvement comprenant une ou plusieurs chaînes (31) transmises autour de leur poulies (32) respectives accouplées d'une façon rotationnelle aux extrémités supérieures du bâti intérieur (3), les extrémités de chaque chaîne étant intégralement branchées respectivement audit bâti extérieur (4) et audit chariot supérieur (2).

11. Véhicule automoteur selon une ou plusieurs des revendications précédentes, **caractérisé en ce que** ledit véhicule comprend des roues à axe vertical (5, 6) lesquelles engagent des guides spéciaux (51) montés au sol.

12. Véhicule automoteur selon une ou plusieurs des revendications précédentes, **caractérisé en ce que** ledit escalier (7) est protégé par une fusion en un matériau résistant à la chaleur.

13. Véhicule automoteur selon une ou plusieurs des revendications précédentes, **caractérisé en ce que** tous les tubes hydrauliques son revêtus d'une tresse en acier et les tubes extérieurs sont également protégés par un matériau résistant à la chaleur.

14. Véhicule automoteur selon une ou plusieurs des revendications précédentes, **caractérisé en ce que** ladite charnière frontale (10) est située juste sous le bec de coulée de ladite poche de coulée (8).

15. Véhicule automoteur selon une ou plusieurs des revendications précédentes, **caractérisé en ce que** ladite poche de coulée (8) a un couvercle pour contenir la température du métal fondu.
